Europäisches Patentamt

(19) European Patent Office

Office européen des brevets

(11) EP 0 895 098 A1

(12) EUROPEAN PATENT APPLICATION
published in accordance with Art. 158(3) EPC

(43) Date of publication:
03.02.1999 Bulletin 1999/05

(51) Int. Cl.$^6$: G02B 5/08, G01M 11/00,
B60R 1/02

(21) Application number: 96909952.2

(22) Date of filing: 09.04.1996

(86) International application number:
PCT/CN96/00024

(87) International publication number:
WO 97/38334 (16.10.1997 Gazette 1997/44)

(84) Designated Contracting States:
DE FR GB IT SE

(71) Applicant: Li, Shiqing
Beijing 100084 (CN)

(72) Inventor: Li, Shiqing
Beijing 100084 (CN)

(74) Representative: Vogler, Silvia
Patentanwälte
Schuster & Partner
Wiederholdstrasse 10
70174 Stuttgart (DE)

(54) METHOD AND DEVICE FOR DESIGNING THE SURFACE OF REARVIEW MIRROR FOR VEHICLE

(57) The present invention relates to a method for designing the surface of rearview mirror for vehicle, which may effect wide-view and blindspot-free. The method includes: establishing the simulating models of driver's eye, the rearview mirror and the rearview-field; finding the optical relation between the surface shape of said rearview mirror and the driver's view-area by testing with the aid of a reflector having deformable surface shape; and determining the rearview mirror surface shape according to the result of said test. The present invention further relates to an algorithm for computing surface shape of the rearview mirror by simulating optical relation of driver's eye, the mirror and the rearview-field. The present invention also relates to a reflector means having deformable surface and used to above test. Said means comprises a plurality of mirror units, these mirror units being independent, and their spatial positions being adjusted.

Fig. 1

## Description

The present invention relates to optical viewing apparatus, and in particular, to methods and device for designing the surface of a rear-view mirror for vehicle having a wide view with no blind spot.

TECHNOLOGY BACKGROUND

The key concern in designing the surface of a rear-view mirror for vehicle is about how to minimize the infidelity of mirrored image while the blind spot is, as far as possible, diminished and even eliminated and the mirrored view may be enlarged to the maximum. This requires that an ideal geometrical shape of a mirror surface be found under the given type of the rear-view mirror, outer dimensions and working conditions etc.

Most of original rear-view mirrors have a kind of plane surface with no mirrored image infidelity. And the basic method of enlarging the view of such a mirror is to add up the size. Nevertheless, simple enlargement of the mirror size is limited by the design of the car body and undoubtedly brings up other defects such as blocking the side view before the mirror etc. Besides, limited enlargement of mirror size is unable to eliminate the blind spot. Consequently such a plane surface mirror, though having an advantage of image fidelity, has been gradually replaced by the rear-view mirror with curved surface due to its notable defects.

In addition to said mirror of plane surface, all the convex mirrors with curved surface may, to some extent, enlarge the image view and at the same time bring various infidelity to the mirrored image. For a long time, the issue of diminishing or eliminating the blind spot of the rear-view mirror while maintaining its image fidelity has not yet been appropriately solved. When the design of the rear-view mirror is biased to the enlargement of the mirrored view, the mirrored image presents a serious infidelity, and if such an infidelity problem is solved, the mirrored view will be diminished or at the cost of taking in a larger blind spot. As a result, it is an accepted conclusion in this technological field that the elimination of blind spot and effective control of said infidelity can not be maintained at the same time.

At present, frequently used rear-view mirrors are a kind of convex mirror which has one single curvature radius. In order to sufficiently enlarge the view field of the rear-view mirror, the curvature radius of the reflecting surface has to be greatly diminished, which makes a serious infidelity to the mirrored image and brings to car drivers a difficulty in distinguishing the objects by the mirrored images as well as in, judging the actual distance to the objects. The main reason that makes such a convex mirror with single curvature radius unable to have both the view field enlarged and infidelity effectively controlled is that the geometrical shape of the mirror surface can not be adapted to meet the actual needs. Once the curvature radius of a mirror surface has been determined, the whole surface shape of the mirror is consequently decided, and once a certain portion of the curvature radius is changed, every other portion of the mirror surface is changed accordingly. Sometimes, the curvature radius must be limited so as to keep the image infidelity of a certain portion of the mirror below a predetermined limit, nevertheless as long as the curvature radius is decided, the whole shape of such a mirror surface is exclusively defined. Even if such a mirror surface still has the blind spot remained, it is unable to make a corresponding adjustment to the design of the whole mirror surface for the needs of the control of the infidelity in a portion of the mirror. Reversedly, sometimes the curvature radius determined for the purpose of minimizing the blind spot can bring serious infidelity or distortion which is so serious that it may even make the mirror useless. In addition, as the geometrical shape of every part of mirror surface with single curvature radius is identical, which makes the objects reflected by the mirror various in distance and angles, the image in the mirror must be seriously distorted. Apparently the convex mirror with a single curvature radius can not reasonably and effectively utilize the whole mirror surface.

An American Patent numbered 4,436,372 has disclosed a kind of rear-view mirror for vehicle having a rotating, elliptical surface, of which the reflection surface is a sort of ball curvature of a rotating elliptical ball. The American patent numbered 5,005,963 made an improvement to the above patent by replacing the whole ball curvature surface with that of 1/4 of the rotating elliptical ball. Even though the above two patents improved, to some extent, the mirror surface with a single curvature radius, there were still some defects. Firstly, such a rotating curved surface keeps the horizontal or longitudinal curvature unchanged, it consequently has the same geometrical properties as that of single curvature surface. As stated above, such a geometrical curvature surface presents an inability in minimizing the blind spots and controlling the distortion. Secondly, as such a geometrical shape of the curved surface is determined only by several parameters, there still exist various distortions at every part of the mirror surface. The negative effects caused by controlling the distortion at a certain part of the mirror surface may extend to the over-all mirror surface, making the field of view diminished. However, the efforts of diminishing the blind spots may results in vain because of the extraordinary distortion. Therefore, such a rotating, elliptical convex mirror makes little improvement to the convex mirror with a single curvature radius.

A Japanese patent application numbered 124,240/76 has disclosed a kind of rear-view mirror, which has a spherical surface with particular curvature radius or an elliptical surface joint to form a convex mirror. Since it is difficult to connect one another the two curved surface with different geometric shapes in the three-dimensional space, such a reflection mirror does not have a smooth and continuous surface, which can undoubtedly cause distortion and break image.

A Japanese patent application numbered 105,103/87 discloses in its specification a convex mirror, which has several spherical surfaces joint together to form the convex surface and the radius of the spherical surface may be designed according to the actual requirement. The spherical surfaces may be connected via a transitional curved surface having a continuously varied curvatures so that a transitional area with smooth connection among the spherical surfaces can be formed. However, no matter in what way spherical mirrors with different curvatures connect to one another, the defect of segmental variations of curvature radius in different portions of the mirror surface may not be removed. Such segmental variations of curvature radius in portions of mirror further lead to a sort of sectional stair changes in curvature radius of mirror surface, bringing stair changes to image.

In addition to the above defects, the above two Japanese patent applications are unable to get rid of such imperfections widely existing in the prior art that the basic shape of the mirror surface shall be defined first and then appropriately corrected by adjusting some geometrical parameters. Consequently the technical solutions of the above two Japanese applications may not be able to completely remove the defects of the prior art.

To sum up, there is a defect long existing in the prior art that the mirror surface may not berationally used. The reason is that the designing of the rear-view mirror has always followed a known procedure, i.e., firstly, a kind of curved surface with known geometrical properties is selected and the geometrical parameters are decided primarily according to the designing requirement and experience of designer, secondly, through repeated tests on the testing samples, such geometrical parameters are corrected and finally a certain shape of mirror surface is determined.

Such a way of designing has three disadvantages:

Firstly, non of known geometric curved surfaces may meet the various and complicated designing requirement for rear-view mirror.

Secondly, predetermination of geometric curved surface involves a lot of subjective factors making it unable to objectively and correctly conform to the physical actuality.

Thirdly, the procedure of predetermining basic shape of mirror surface first and making corrections via repeated tests second adds up the difficulty of testing manufacture of the rear-view mirror, and is not economic either.

The present applicant puts forward in the international patent application numbered PCT/CN95/00018 a kind of surface shape of rear-view mirror with no blind spots. Such a surface of rear-view mirror has an averaged curvature which gradually increases along a vertical direction from the upper portion to the lower and alone a horizontal direction from an inner side closer to the car body to the outer side farther away from the car body. To quantitatively define the surface of the above mirror, the patent application puts forward that the surface shape of the mirror be described by a surface constructive boundary formed by four second-curves. The parameters of said four second-curves are set in accordance with experience and experimental data. Such a patent application presents a reasonable surface for rear-view mirror, but since the starting stage of formation of the mirror surface depends upon experiential data and subjectively-set geometrical curves which are, to a great extent, limited and different from the actuality of physic phenomena, the quantitative mirror surface finally formed has a bigger difference from the ideal surface of the mirror. In addition, the surface shape designed on the experiential data requires repeated correction, which adds up to the difficulty and cost of testing production of the product.

OBJECTIVES OF INVENTION

One objective of the present invention is to provide a testing method of forming a surface of rear-view mirror for vehicle with larger field of view and without blind spots, which may, with only one test, define a surface shape of rear-view mirror without blind spots by simulating the relative positional and optical relationships between eyes of the driver, the rear-view mirror, background objects and vehicles etc., and can effectively limit the image distortion caused by the rear-view mirror assuring a clear mirror reflection.

Another objective of the present invention is to provide a calculation method for forming a rear-view mirror for vehicle with a larger field of view and without blind spots, which may calculate, based on geometric principles of optics, a surface shape of the rear-view mirror that meets the blind-free requirement by simulating the relative positional and optical relationships between eyes of the driver, the rear-view mirror, background objects and vehicles etc., and can effectively limit the image distortion caused by the rear-view mirror assuring a clear mirror reflection.

Yet another objective of the present invention is to provide an apparatus for forming a rear-view mirror using the above testing method for forming the rear-view mirror for vehicle.

SUMMARY OF THE INVENTION

The testing method for forming a rear-view mirror for vehicle of the present invention includes the following steps:

a. providing a light source at an suppositive eye-position of a driver; providing a reflection mirror with a changeable mirror surface at an simulated position of a rear view mirror; providing background objects at simulated position of objects behind the rear view mirror; providing a suppositive car body by simulating a car size and position;
b. directing the light from the light source to a predetermined area on the surface of said mirror to be tested;
c. adjusting the surface shape of said mirror so as to have the light, via said predetermined area on the surface of said mirror to be tested, reflected on a corresponding and predetermined position on the background objects;
d. directing the light to a next predetermined area on the surface of said mirror to be tested;
e. adjusting the surface shape of said mirror so as to have the light, via said next, predetermined area on the surface of said mirror to be tested, reflected on the next corresponding and predetermined position on the object;
f. repeating the steps of "d" and "e" on all predetermined area on the surface of said mirror to be tested and predetermined area of the background objects;
g. taking the surface shape of said mirror obtained by all the above steps as the surface shape of the rear-view mirror.

Said mirror with changeable surface shape may be made by soft materials or by at least four independent pieces of unit lenses joint together. Because the optical properties of plane lenses are relatively simple, the plane lenses are of better choice when the mirror is jointly formed by said independent unit lenses. Further as square-shaped plane lenses are easy to be connected, preferred unit lenses are of square shape. In addition, said predetermined area on the surface of the mirror to be tested may be the initial position on the reflecting surface of said unit lenses without adjustment of the above.
The background objects may be provided along the longitudinal direction of the vehicle body according to the actual situations, or may be replaced by at least one curved surface or plane surface. Since such a provision of background objects according to the actual situations is limited by such conditions as the test ground as well as equipment etc., at least one simulated curved surface or plane surface may be adopted instead so as to block all the background objects as required by the design.
In order to maximize the cover of the designed field of view, said simulated background objects would preferably meet the following:

the bottom of the background objects contact with the ground, the background objects closer to the side of the driver is on the extended line of longitudinal direction of suppositive vehicle body, and the maximum outer boundary of the background objects is on or outside the boundary of the designed field of view of the rear-view mirror.

When the background objects are replaced by a curved surface or a plane surface, said curved surface or plane surface, said curved or plane surface is positioned vertically.
When the background objects are replaced by more than one curved or plane surfaces, one of the surface is positioned vertically and the others may be positioned according to the design of the field of view. For example, when two plane surfaces are adopted to replace the background objects, one of the plane surfaces may be vertically positioned for mainly simulating the background objects behind the suppositive vehicle; while the other may be horizontally positioned mainly for simulating the ground objects besides the vehicle body. No doubt, said two plane surfaces may not be vertical to one another as well in case of such a design as required by the field of view.
Said curved or plane surface may be one surface of those thin boards, films, screens, wall and ground surfaces. For ease of operations, such a curved or plane surface having a square shape may be selected. In addition, in order to easily and quantitatively test the surface of the mirror, said curved or plane surface may be divided into four or more portions, each of them corresponds to a unit lens and may be divided according to the horizontal or vertical lines or designing requirement.
The mirror surface as formed by the above steps may be further perfected by data optimization. Therefore, one step may be added between the step "f" and "g":

i. collecting data for defining a spacial position on each of predetermined and adjusted area of the mirror surface to be tested, and as for the mirror formed by independent unit lenses, collecting data for defining a spacial position of each of the unit lenses after adjustment;
ii. taking the collected data as initial data for optimization, and simulating connection of curved surfaces by minimum two-bit multiplication under the condition of maintaining a smooth and continuous curved surface.

The apparatus for forming a rear-view mirror for vehicle according to the present invention includes a reflecting mirror, a frame for supporting said mirror and an adjusting means fixed on said frame and connected to said mirror, wherein the shape of the surface of the mirror may be changeable.

Said mirror may be made by soft materials or may be made by at least four independent unit lenses joint together. As stated above, when said mirror is formed by said unit lenses, plane lenses are of ideal choice and in particular the square-shaped lenses are the preferred.

To easily define the initial positions of each of said unit lenses and adjust them to be adapted to the over-all optical requirement of the whole mirror, each unit lens is be hinged with one adjusting means of the mirror. Said adjusting means is a device to make said unit lens move horizontally and turn around. For example, said means may be composed of an adjusting screw and an adjusting rod. Said screw is connected with said rod through a dead screw hole which is on one end of said rod and vertical to the end surface of the rod. The other end of the rod has a universal joint connecting to unit lens. Said rod is amounted on said supporting frame. Said frame may be used as an amounting frame for said adjusting means as well as a support for the mirror, and may be constituted by three supporting boards, each of them having its surface vertical to the ground. The three supporting boards are parallelly positioned and connected by fixing screws. Each of supporting boards has through holes numbered equal to that of said rods, and the rods are placed within the holes.

The calculation method for forming a rear-view mirror for vehicle of the present invention includes the following steps:

a. providing a suppositive light source at a simulated eye position of a driver; providing a suppositive reflection mirror at a simulated position of rear-view mirror; providing a background object by simulating an object behind the rear-view mirror; providing a suppositive vehicle body by simulating the size and position of vehicle;

b. letting the suppositive light of the light source to scan all the suppositive mirror surface, and at the same time adjusting the surface shape of suppositive mirror so as to direct the light reflected from all parts of the mirror to the suppositive background object and cover all the background object;

c. taking the surface shape of suppositive mirror obtained by following the above steps as that of the rear-view mirror.

The suppositive background objects may be provided along the longitudinal direction of the vehicle body according to the actual situations, or may be replaced by at least one simulated curved or plane surface instead so as to block all the background objects as required by the design.

In order to maximize the cover of the designed field of view, said simulated background objects shall preferably meet the following:

the bottom of the background objects contact with the ground, the background objects closer to the side of the driver is on the extended line of longitudinal direction of suppositive vehicle body, and the maximum outer boundary of the background objects is on and outside the boundary of the designed field of view of the rear-view mirror.

When the background objects are replaced by a curved surface or a plane surface, said curved surface or plane surface, said curved or plane surface is positioned vertically.

When the background objects are replaced by more than one curved or plane surfaces, one of the surface is positioned vertically and the others may be positioned according to the design of the field of view. For example, when two plane surfaces are adopted to replace the background objects, one of the plane surfaces may be vertically positioned for mainly simulating the background objects behind the suppositive vehicle; while the other may be horizontally positioned mainly for simulating the ground objects besides the vehicle body. No doubt, said two plane surfaces may not be vertical to one another as well in case of such a design as required by the field of view.

The surface shape of the rear-view mirror may be shown by the following formula:

$$dZ = -\left( \frac{X_N - X}{Z_N - Z} dX + \frac{Y_N - Y}{Z_N - Z} dY \right)$$

wherein:

X, Y, Z may be any point of the mirror on a position of a rectangular coordinates

N is a cross point between a line from said suppositive light source to one point on said suppositive background object and a normal line of a plane cut from any point on the mirror.

$X_N$, $Y_N$, $Z_N$, is the point N at the rectangular coordinates.

The next is the description to the preferred embodiment of the present invention by reference to the drawings.

The present invention has totally 15 drawings wherein:

Fig. 1 is a schematic diagram of the apparatus for forming the surface of the rear-view mirror;

Fig. 2 is a schematic diagram of connection between the unit lenses of said apparatus for forming the surface of the rear-view mirror and the supporting boards as well as said adjusting means;

Fig. 3 is a schematic diagram of optical relationship between the eye point of the driver, rear-view mirror and the objects behind the mirror;

Fig. 4 shows the surface of the right mirror of Beijing Jeep after data optimization;

Fig. 5 shows the surface of the left mirror of Beijing Jeep after data optimization;

Fig. 6 shows the surface of the right mirror of the car Santana after data optimization;

Fig. 7 shows the surface of the left mirror of the car Santana after data optimization;

Fig. 8 is a diagram comparing the optical properties of the surface of rear-view mirror formed by the testing method of the present invention and that of the rear-view mirror of the prior art;

Fig. 9 is a schematic diagram showing the quantitative, geometric optical relationship between suppositive eye point of the driver, rear-view mirror and objects behind the mirror;

Fig. 10 is a schematic diagram showing the suppositive rear-view mirror sectioned with grids;

Fig. 11 is a schematic diagram showing the calculated surface of the suppositive background object sectioned with grids;

Fig. 12 is a schematic diagram showing the geometric relationship between the grids on the suppositive rear-view mirror and that on the calculated surface of the suppositive background objects;

Fig. 13 is a schematic diagram showing the spacial relationships between the suppositive vehicle, driver's eye, rear-view mirror and the objects behind the rear-view mirror;

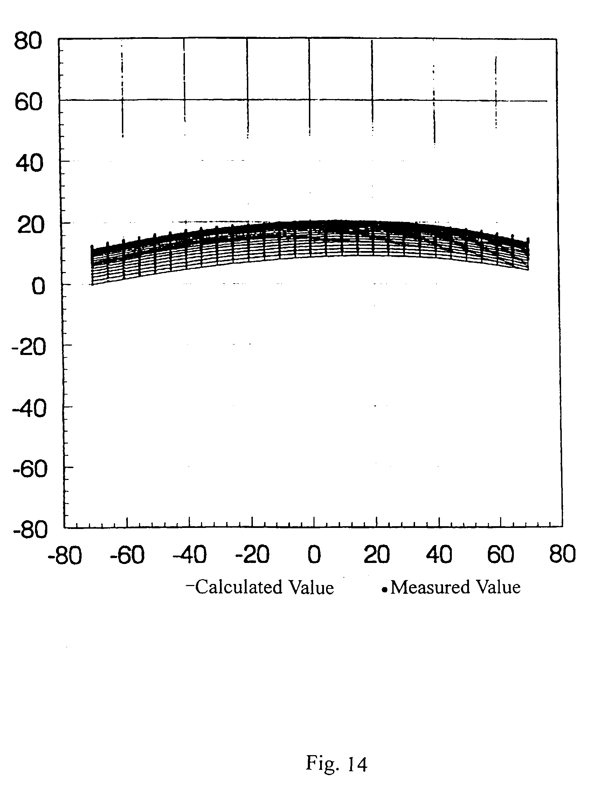

Fig. 14 shows the surface of the right mirror for Beijing Jeep 2020 calculated by the forming method of the present invention;

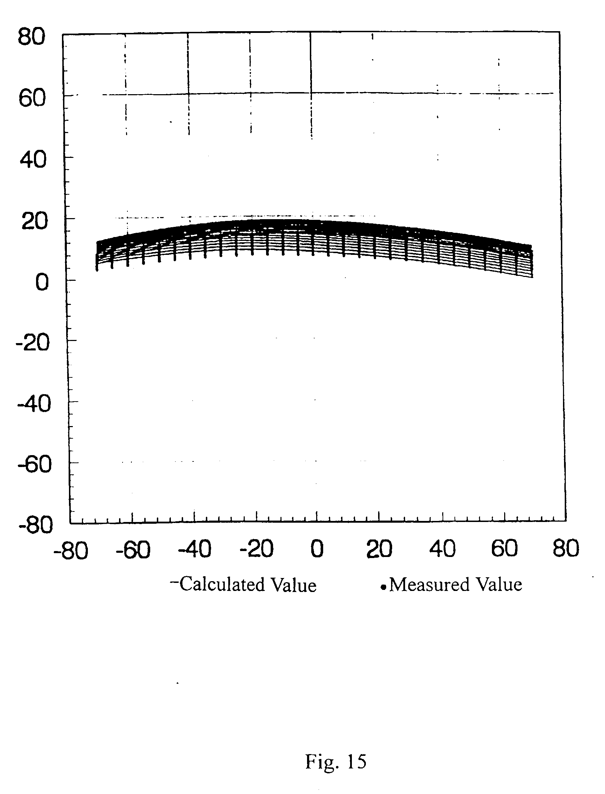

Fig. 15 shows the surface of the left mirror for Beijing Jeep 2020 calculated by the forming method of the present invention.

AN EMBODIMENT OF SAID APPARATUS FOR FORMING THE SURFACE OF THE REAR-VIEW MIRROR

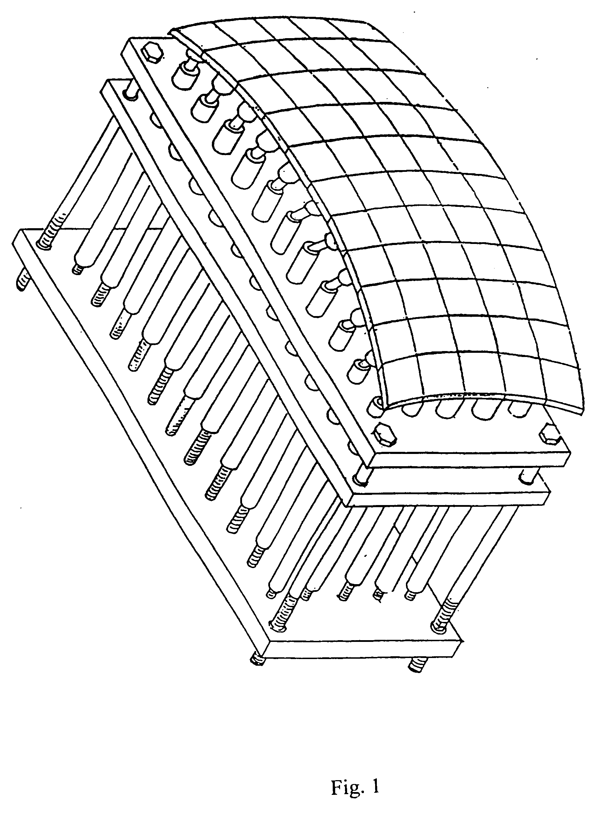

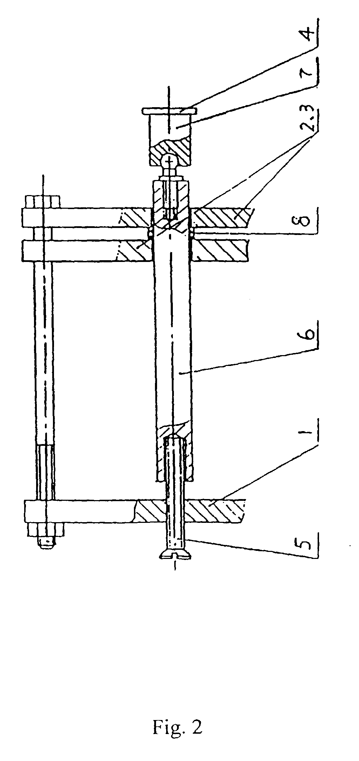

Please refer to the Figs 1 and 2. The apparatus as shown includes a reflection mirror, a frame supporting the reflection mirror and an adjusting means which is amounted on the supporting frame and connected with said reflection mirror, wherein said supporting frame is constituted by three supporting boards 1, 2 and 3, said reflection mirror comprises four independent unit lenses 4 and the adjusting means is formed by adjusting screw pin 5, adjusting rod 6 and universal joint 7.

Said supporting boards 1, 2 and 3 are all rectangular metal boards, and each of the surfaces of the boards has their corresponding side-lengths equal to one another. Supporting board 1 has through screw holes vertical to the board surface with the same diameters, and the supporting boards 2 and 3 has through holes vertical to the board surface with the same diameters. The number of the holes on each of the supporting boards is equal to the number of the unit lenses 4. All the holes on each of the boards are arranged in the order from the left to the right and the upper and the lower, and the center of each lined holes are on the same horizontal line, and center of each columned holes are on the same vertical line. In addition, to meet the needs of the assembly, the holes of each supporting board correspond to each other one by one, and when three supporting boards are overlapped together, every hole on each of the supporting boards corresponds axially to that of the other two supporting boards. The three boards are parallelly juxtaposed in accordance with the serial numbers and connected to one another by fixing screws, and the surface of each board is vertical to the ground, wherein there is a space between the boards 1 and 2, which may be adapted to the length of the adjusting rod. There is another space between board 2 and 3 as well so as to add a rubber ring 8 there between. Each of the screw holes of the board 1 has one adjusting screw pin 5 therein which is connected to the adjusting rod 6 by screw. One end of the adjusting rod 6 has dead screw holes along the direction of rod axis, and the rod 6 is connected to the adjusting screw pin 5 via said dead screw holes. The other end of the rod 6 is placed in the holes between the boards 2 and 3, and there is a universal joint 7 at the end. The universal joint 7 is connected to said rod 6 by screw via said dead screw hole on the other end of the rod 6, and each of the universal joints 7 is connected to a unit lens 4. The unit lens 4 is a rectangular plane lens with the back of the reflection surface directed to the universal joint 7. The rubber ring 8 is sleeved on the outer surface of said rod 6 and between the boards 2 and 3 so as to raise the resistance to the placement of said rod 6 enhancing the accuracy. The number of the unit lenses 4 may be decided according to the actual needs. Under ordinary circumstances, more unit lenses would help enhance the accuracy of the data collection. Said apparatus of forming surface of rear-view mirror may be fixed on a frame which may have its height adjusted. When screw pin 5 is screwed, said adjusting rod 6 would move correspondingly so that said unit lens 4 may move horizontally along the axial direction of said rod 6. In addition to the movement following said rod 6, unit lens 4 may as well turn around said universal joint 7 so that each of the lenses may be joint together.

AN EMBODIMENT OF THE TESTING METHOD FOR FORMING THE SURFACE OF REAR-VIEW MIRROR

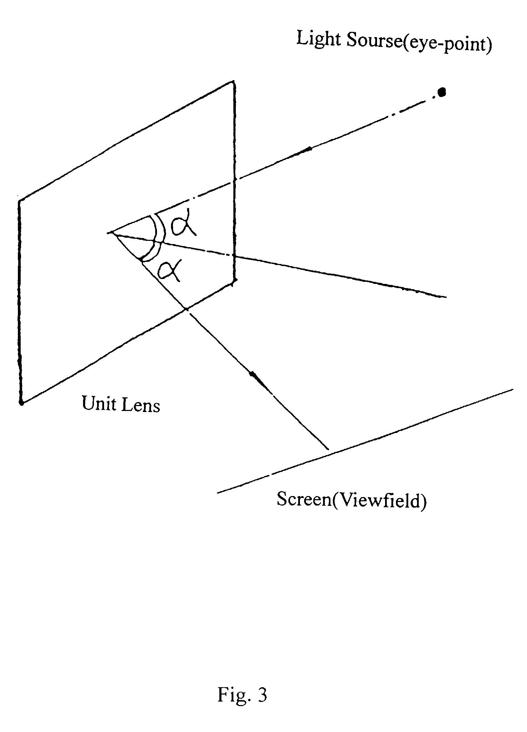

Refer to Fig. 3. For easy description, the following description to the best embodiment of the present invention is made to the left one of the rear-view mirror. No doubt, the fundamentals for defining the shape of the left mirror may be applied to the shaping of the right mirror.

The simulated positions of the eye point of the driver and the rear-view mirror are provided in the proportion of 1:1 in dark room. A light source at the simulated eye position of the driver is arranged, wherein the light source may be a laser or others that may emit light beams. And behind the position of the rear-view mirror is provided with an apparatus for forming said rear-view mirror as described previously. Said apparatus is fixed at a frame which is adjustable in height.

As stated above, the objects behind the mirror may be simulated by real objects that are various in distance and angles, or by at least one curved or plane objects. In the present embodiment, the background objects may be simulated by a rectangular screen covering the background objects in the sight. The principle of arranging the screen is such that its size and position shall meet the design requirement for the view field of the rear-view mirror, i.e., the four boundary lines of the screen are not at least within the designed field of view of the rear-view mirror. Said screen is provided vertically at the side rear on one side of the vehicle driver and the bottom of the screen contacts the ground. One side of the screen closer to the suppositive driver is on the longitudinally extended line on the left side of the suppositive vehicle. The screen is divided into at least four rectangular portions by vertical and horizontal lines, wherein the number of the portions is the same as that of the unit lenses 4 on the apparatus of forming the surface of the mirror, and each of the portions corresponds to one of the unit lenses 4. For example, the portions of the screen are numbered serially in the left-to-right and the upper-to-bottom order and the unit lenses of the above apparatus are numbered in the same order, then the same numbered unit lens and the portion correspond to one another.

Determination of the surface of the mirror starts from the right upper corner of the reflection mirror of the apparatus for forming the surface of mirror. The light of the light source is directed on to one unit lens 4 numbered as 1 on the right upper corner of the mirror of the apparatus for forming the mirror surface, and the reflected light, via adjustment of the unite lens 4's position by said adjusting screw pin 5 and the adjusting rod 6, is directed to the portion numbered as 1 on the right upper corner of the screen. Then, the light is moved to another unit lens 4 numbered 2 to the left of the unit lens 4 on the right upper corner, and the reflected light, again via adjustment of the spacial position of the second unit lens 4 by said adjusting screw pin 5 and the adjusting rod 6, is directed to the portion numbered 2 to the left of the above right upper portion of the screen. The light is in turn moved to the left repeating the above adjusting steps till the first line of all the unit lenses 4 have been covered. The light then is moved to the right side of the next lined unit lenses repeating the above steps until all the unit lenses 4 have been adjusted. In the procedure of above adjustment, said universal joint 7 may be used to adjust the angles of the lenses 4 so as to allow the connection of the neighboring unit lenses. When the last unit lens 4 is adjusted, the reflection mirror formed by all the lenses may cover the blind spots, meeting the requirement of the design in respect of the field of view and conforming objectively and correctly to the optical relationship between the eye of the driver and the background objects. Meanwhile a minimum distortion is achieved under the premises of assuring the sufficient width of view field. When the number of the lenses 4 is increased, the shape of the surface of the mirror intends to be more rational.

The table 1 shows the data of spacial positions of the unit lenses on the model surface of the left mirror of car Santana after adjustment. The data of the table shows that the averaged curvature of the surface of the rear-view mirror formed by the method of the present invention conforms to the variation pattern described in the international application for patent with the application number PCT/CN/00018 filed by the same applicant.

Table 1

(mm)

| y / x z | -55 | -45 | -35 | -25 | -15 | -5 | 5 | 15 | 25 | 35 | 45 | 55 |
|---|---|---|---|---|---|---|---|---|---|---|---|---|
| -90 | 2.48 | 3.48 | 3.80 | 4.34 | 4.70 | 5.18 | 5.20 | 5.22 | 5.02 | 4.52 | 3.90 | 2.82 |
| -80 | 3.44 | 4.10 | 4.64 | 5.28 | 5.64 | 6.12 | 6.24 | 6.28 | 5.98 | 5.62 | 5.14 | 3.98 |
| -70 | 4.24 | 5.00 | 5.50 | 6.10 | 6.56 | 6.80 | 7.08 | 7.18 | 7.06 | 6.64 | 6.10 | 5.04 |
| -60 | 4.90 | 5.64 | 6.74 | 6.80 | 7.36 | 7.68 | 8.00 | 7.96 | 7.82 | 7.66 | 7.02 | 5.90 |
| -50 | 5.50 | 6.74 | 6.92 | 7.48 | 8.04 | 8.36 | 8.58 | 9.54 | 8.48 | 8.38 | 7.86 | 6.80 |
| -40 | 5.98 | 6.70 | 7.54 | 8.60 | 8.70 | 8.96 | 9.04 | 9.56 | 9.18 | 8.90 | 8.38 | 7.34 |
| -30 | 6.32 | 7.08 | 7.80 | 8.44 | 9.06 | 9.34 | 9.44 | 9.58 | 9.46 | 9.38 | 8.84 | 7.80 |
| -20 | 6.70 | 746 | 8.14 | 8.78 | 9.34 | 9.66 | 9.78 | 9.82 | 9.92 | 9.66 | 9.22 | 8.06 |
| -10 | 6.80 | 7.58 | 8.26 | 9.00 | 9.58 | 9.74 | 9.94 | 9.98 | 10.16 | 9.94 | 9.58 | 8.60 |
| 0 | 6.82 | 7.70 | 8.44 | 8.98 | 9.60 | 9.92 | 10.12 | 10.22 | 10.30 | 10.20 | 9.82 | 8.90 |
| 10 | 6.78 | 7.48 | 8.30 | 8.86 | 9.44 | 9.80 | 10.08 | 10.12 | 10.14 | 10.08 | 9.92 | 9.02 |
| 20 | 6.34 | 7.30 | 8.16 | 8.78 | 9.16 | 9.64 | 9.80 | 10.10 | 10.12 | 10.12 | 9.70 | 8.74 |
| 30 | 5.94 | 6.96 | 7.84 | 8.42 | 8.72 | 9.14 | 9.28 | 9.78 | 9.86 | 9.80 | 9.60 | 8.38 |
| 40 | 5.50 | 6.44 | 7.28 | 8.02 | 8.48 | 8.70 | 9.04 | 9.32 | 9.40 | 9.32 | 9.02 | 8.08 |
| 50 | 4.85 | 5.90 | 6.56 | 7.38 | 7.80 | 8.26 | 8.60 | 8.60 | 8.70 | 8.66 | 8.24 | 7.42 |
| 60 | 4.24 | 4.96 | 5.74 | 6.22 | 6.82 | 7.42 | 7.78 | 7.88 | 8.24 | 8.26 | 7.60 | 6.32 |
| 70 | 3.11 | 3.90 | 4.50 | 5.30 | 5.82 | 6.32 | 6.60 | 6.98 | 6.86 | 7.14 | 6.88 | 6.02 |
| 80 | 1.79 | 2.58 | 3.38 | 4.32 | 4.64 | 5.48 | 5.54 | 5.84 | 6.20 | 6.22 | 5.66 | 4.62 |
| 90 | 0.00 | 0.82 | 1.70 | 2.48 | 3.30 | 4.04 | 4.30 | 4.28 | 4.66 | 4.50 | 4.34 | 2.94 |

Set up a spacial rectangular coordinates, taking the surface plane of the board supporting the apparatus for forming the mirror surface as the axes of X and Y of the coordinates, and the axis vertical to the board surface as the axis Z thereof. Test the spacial position of each of the unit lenses 4 in said coordinates and make a record. An expedient way is to measure the length of the adjusting screw pin extruding outside of the supporting board 1, so as to determine the position of the unit lenses on the Z axis. Take the spacial position data of the unit lenses 4 as the initial data for the minimum second multiplication, and optimize them according to the following:

a. As to each of given value j, Y(j) is set, and based on the actually tested X (i) (i=1,N), Z (i,j) (i=1, N,j given), apply a triple multinomial

$$Z(i,j) = a_0(j) + a_1(j)X + a_2(j)X^2 + a_3(j)X^3$$

simulate curved connection according to the principles of minimum second multiplication, so as to obtain the values of such parameters as $a_0(j), a_1(j), a_2(j)$ and $a_3(j)$.

b. When j ranges from 1 to M, apply the above process to obtain the groups of the parameters

$a_0(j)(j=1,M)$, $a_1(j)(j=1,M)$

$a_2(j)(j=1,M)$, $a_3(j)(j=1,M)$.

c. Based on the groups $Y(j)(j=1, M)$, $a_0(j)(j=1,M)$, apply once again the triple multinomial:

$$a_0(Y) = b_0 + b_1Y + b_2Y^2 + b_3Y^3$$

simulate curved connection according to the principles of minimum second multiplication, to obtain reversely the values of such parameters as $b_0$, $b_1$, $b_2$, and $b_3$ in the multinomial.

d. apply groups $Y(j)(j=1,M)$, $a_1(j)(j=1, M)$, and use linear equation

$$a_1(Y) = c_0 + c_1Y$$

simulate curved connection according to the principles of minimum second multiplication, to obtain reversely the values of such parameters as $c_0, c_1$ in the multinomial.

e. apply groups $Y(j)(j=1,M)$, $a_2(j)(j=1,M)$, and use linear equation

$$a_2(Y) = d_0 + d_1Y$$

simulate curved connection according to the principles of minimum second multiplication, to obtain reversely the values of such parameters as $d_0, d_1$

f. apply groups $Y(j)(j=1,M)$, $a_3(j)(j=1,M)$, and use linear equation $a_3(Y)=e_0+e_1Y$ simulate curved connection according to the principle of minimum second multiplication, to obtain reversely the values of such parameters as $e_0, e_1$.

g. The equation of curved surface of optimized mirror obtained by the above steps is:

$$Z(X,Y) = a_0(Y) + a_1(Y)X + a_2(Y)X^2 + a_3(Y)X^3$$

$$a_0(Y) = b_0 + b_1Y + b_2Y^2 + b_3Y^3$$

$$a_1(Y) = c_0 + c_1Y$$

$$a_2(Y) = d_0 + d_1Y$$

$$a_3(Y) = e_0 + e_1Y$$

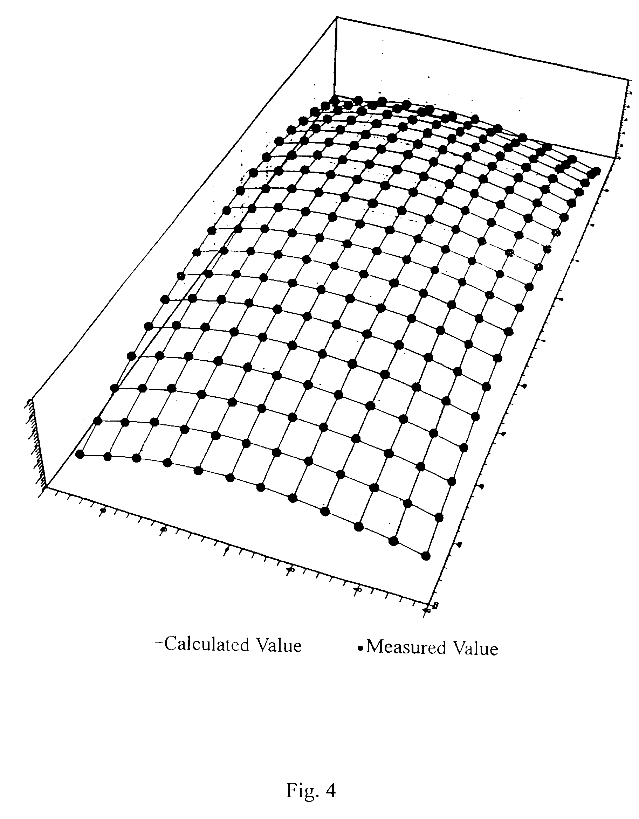

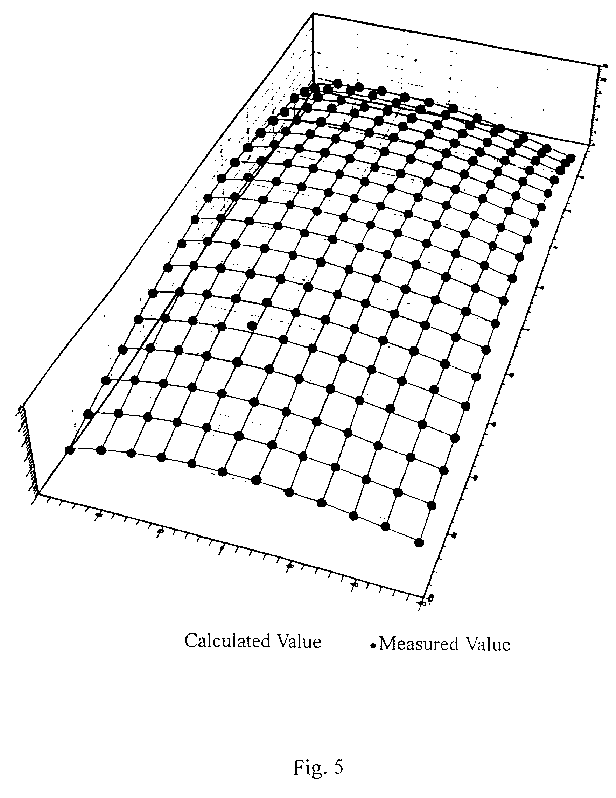

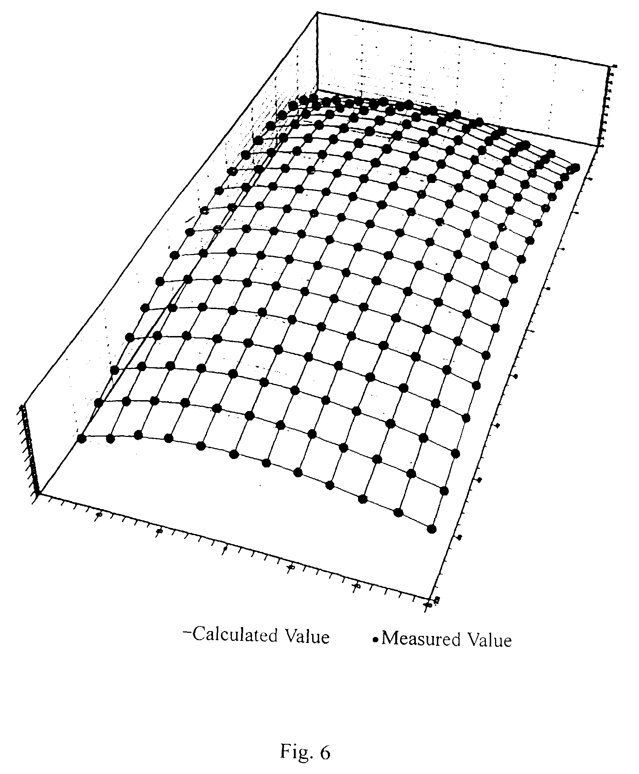

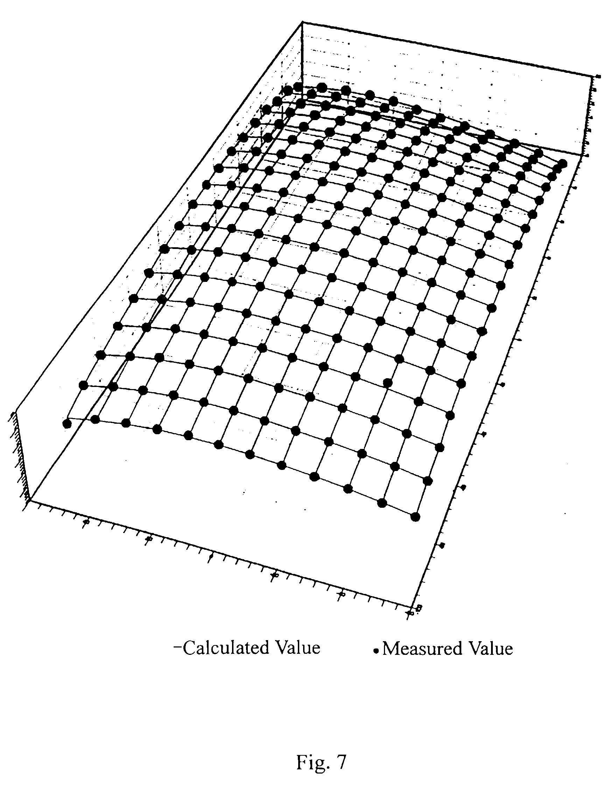

Figs 4 ~7 show the surface shapes of the left and right mirrors of Beijing jeep and car Santana after optimization.

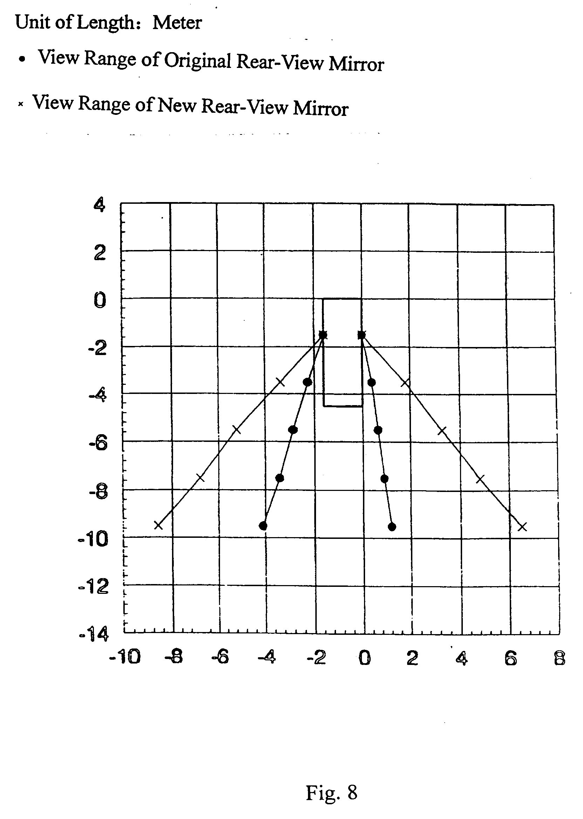

Fig. 8 shows the comparison between the surface of the rear-view mirror with larger field of view and no blind spots formed by the above method and that of an ordinary rear-view mirror. The dotted lines in the figure is the field of view of the prior art rear-view mirror and the lines with crosses indicates the field of view of the rear-view mirror formed by the present invention.

AN EMBODIMENT OF CALCULATION METHOD FOR FORMING THE SURFACE OF REAR-VIEW MIRROR

For easy description, in the following embodiments, the background objects are supposed to be a plane surface vertically positioned to cover the suppositive background objects with a rectangular mirror boundary. No doubt, the method described in the following embodiment may also be applied to the background objects and mirror surface of other types.

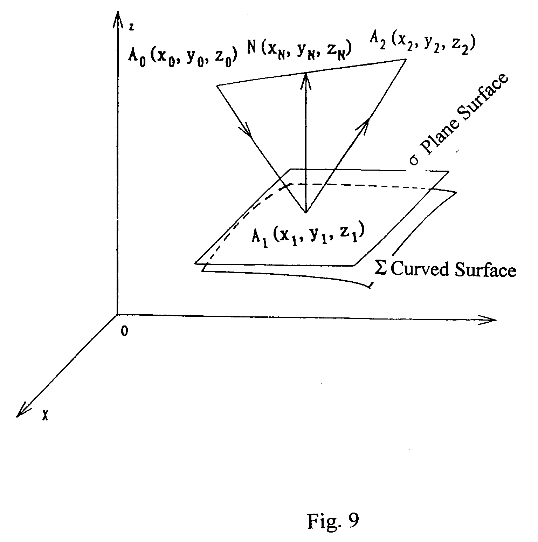

Refer to Fig. 9. Set up a spacial rectangular coordinates. Set a suppositive light source (eye point), rear-view mirror, background objects and the spacial position of the vehicle body based on the actual size of the vehicle and designing requirement for the field of view of the rear-view mirror:

set suppositive light source $A_0(X_0, Y_0, Z_0)$;
set one point on the surface $\Sigma$ of the suppositive rear-view mirror as $A_1(X_1, Y_1, Z_1)$;
set a corresponding point on the suppositive background object as $A_2(X_2, Y_2, Z_2)$;
set a sectioned plane at the point A, on the mirror surface $\Sigma$ as $\sigma$;
set a cross point between the normal of the sectioned plane $\sigma$ at the point $A_1$ on the mirror surface $\Sigma$ and the line connecting the light source $A_0$ to the corresponding point $A_2$ on the suppositive background object as $N(X_N, Y_N, Z_N)$;

As stated above, when the actual size of the vehicle and the designing requirement for the field of view of the rear-view mirror have been determined, the special position of $A_0$ has been known. According to the present invention, the light from the point $A_0$ shall pass the point $A_1$ and be reflected to the point $A_2$, and on this condition, the equation of the plane σ of the mirror surface Σ cut at the point of $A_1$:

Set the line $A_1N$ connecting the point $A_1$ to the point N as the normal of the cut plane σ at the point $A_1$, and according to the laws of beeline transmission, reflection and reversibility of light, there should be a common plane with four points of $A_0$, N, $A_1$ and $A_2$, and in addition there is:

an angle of incidence $\angle A_0A_1N = \angle A_2A_1N$
Besides, the line connecting the points $A_1$ and N is the bisector of the angle $\angle A_0A_1A_2$.

In accordance with the above conditions, the coordinates at the point N shall be:

$$X_N = \frac{X_0 + \lambda X_2}{1 + \lambda}$$

$$Y_N = \frac{Y_0 + \lambda Y_2}{1 + \lambda} \tag{1}$$

$$Z_N = \frac{Z_0 + \lambda Z_2}{1 + \lambda}$$

in the above equations:

$$\lambda = \frac{A_0 N}{A_2 N} = \frac{A_0 A_1}{A_1 A_2}$$

$$A_0 A_1 = \sqrt{(X_0 - X_1)^2 + (Y_0 - Y_1)^2 + (Z_0 - Z_1)^2}$$

$$A_1 A_2 = \sqrt{(X_1 - X_2)^2 + (Y_1 - Y_2)^2 + (Z_1 - Z_2)^2}$$

From the equation (1) the coordinates at point N can be obtained and further the direction of $A_1N$ may be determined. When the coordinates at the point $A_1$ on a plane cut from the minor surface and the direction of the normal $A_1N$ of said plane are given, the cut plane σ has the following equation:

$$X \cdot COS\alpha + Y \cdot COS\beta + Z \cdot COS\gamma - p = 0 \tag{2}$$

Wherein:

α, β, γ stand for the directional angle of the normal of cut plane σ, and $p$ represents the distance between the original point to the cut plane σ, and:

$$COS\alpha = \frac{X_N - X_1}{1}$$

$$COS\beta = \frac{Y_N - Y_1}{1}$$

$$COS\gamma = \frac{Z_N - Z_1}{1}$$

$$1 = \sqrt{(X_N - X_1)^2 + (Y_N - Y_1)^2 + (Z_N - Z_1)^2}$$

The equation of the cut plane $\sigma$ may be expressed by X,Y,Z of rectangular coordinates:

$$X(X_N - X_1) + Y(Y_N - Y_1) + Z(Z_N - Z_1)$$
$$= X_1(X_N - X_1) + Y_1(Y_N - Y_1) + Z_1(Z_N - Z_1) \qquad (3)$$

the equation (3) may be changed to an equation of Z:

$$Z = -\frac{X_N - X_1}{Z_N - Z_1} \cdot X - \frac{Y_N - Y_1}{Z_N - Z_1} \cdot Y + \frac{(X_N - X_1)X_1 + (Y_N - Y_1)Y_1 + (Z_N - Z_1)Z_1}{Z_N - Z_1} \qquad (4)$$

If the equation of curved surface $\Sigma$ of the mirror is:

$$Z = f(X,Y)$$

then when it is differentiated, there is:

$$dZ = \frac{\partial f}{\partial X} \cdot dX + \frac{\partial f}{\partial Y} \cdot dY \qquad (5)$$

Since the plane $\sigma$ is cut from one point on the curved surface $\Sigma$ of the mirror, then equations (4) and (5) can be:

$$\frac{\partial f}{\partial X} = -\frac{X_N - X_1}{Z_N - Z_1}$$
$$\frac{\partial f}{\partial Y} = -\frac{Y_N - Y_1}{Z_N - Z_1} \qquad (6)$$

replace (5) with (6) there is then:

$$dZ = -\left(\frac{X_N - X_1}{Z_N - Z_1}dX + \frac{Y_N - Y_1}{Z_N - Z_1}dY\right) \qquad (7)$$

As the point $A_1$ on the mirror is randomly selected, the subscripts of $X_1$, $Y_1$, $Z_1$ may be removed therefrom and an ordinary control equation for the curved surface of the mirror may be obtained:

$$dZ = -\left(\frac{X_N - X}{Z_N - Z}dX + \frac{Y_N - Y}{Z_N - Z}dY\right) \qquad (8)$$

Based on (8) above, the shape of curved surface of mirror which may make the light from every parts of the mirror surface reflected to the background objects and cover all the suppositive background objects can be obtained after calculation with the values.

In the embodiments of calculations with values hereunder, the initial minor surface and the suppositive background object are rectangular plane surfaces, and the beeline of the said rectangular plane boundary sections the mirror surface and the suppositive background objects into a plurality of grids. Apparently, an ordinary technicians of the art may apply the fundamental ideas of said method of value calculation to that calculation for other types of initial mirror surface and suppositive background objects.

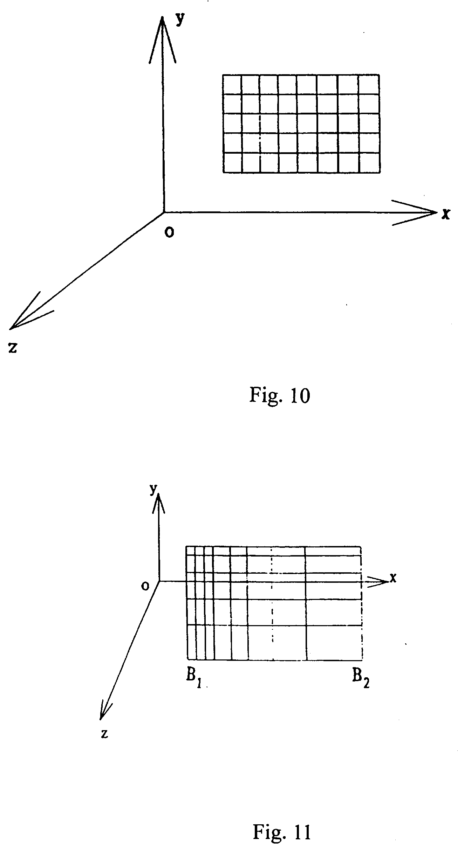

The following is the analysis of the mirror with grids. Refer to Fig. 10 Set a special rectangular coordinates and set the initial mirror surface as a rectangular plane, axis of Z parallel to the normal of the mirror surface, and divide, along the axes of X and Y of the initial mirror surface into grids. Set the nodes i=1, 2,_n along the direction of X and the nodes

$$j = 1, 2, \ \text{\fbox{}}$$

along the direction of Y, wherein n and m stand for positive integers of the nodes along the directions of X and Y. For easy calculation, each of the grids is a square. Take an edge/angle point of the mirror surface as the reference point, and the spacial position of the node is given when the size and spacial position of the suppsitive rear-view mirror have been specified.

The next is the analysis, with the grids, of the calculated surface of the suppositive background objects at the same spacial rectangular coordinates. Refer to Fig. 11, and set the background object to be a plane which may block the designed field of view and is placed vertically with lead droop. The bottom line $B_1B_2$ of the plane contacts with the ground, and the side closer to the vehicle body is on the extended longitudinal line. The specific position may be designed according to the requirement of the view field. By reference to the method of gridding division to the minor surface, divide the calculated surface of the background objects, along the directions of X and Y into several rectagular grids, the number of which is equal to the number of the grids on the mirror surface and corresponds to that on the minor surface. The size of the grids on the calculated surface of the background object is defined according to the following method:

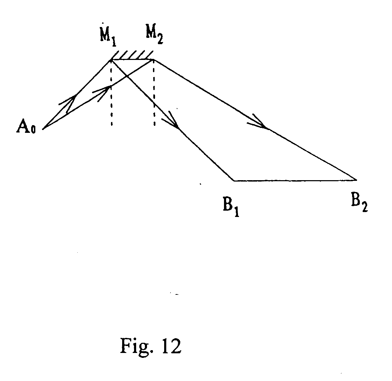

Refer to Fig. 12, when the calculated surface of the background object are divided into equal grids, said grids may be determined according to the following proportional relationships, and when they are not divided into equal grids in line with special requirements for field of view, the following relationship may be referenced by enlarge or deduce it according to the requirement of design. For example, by reference to Fig. 12, those parts which are closer to the vehicle body may be divided into tightened grids.

$$\frac{A_0 M_1}{A_0 B_1} = \frac{A_0 M_2}{A_0 B_2} = \frac{M_1 M_2}{B_1 B_2} \qquad (9)$$

wherein:

$A_0$ is a suppositive light source
$M_1$ and $M_2$ are nodes on the suppositive surface of rear-view mirror
$B_1$ and $B_2$ are nodes on the calculated surface of the suppositive background objects

Based on equation (9), the calculated surface of said suppositive background objects can be divided into the grids corresponding to that of the mirror surface.

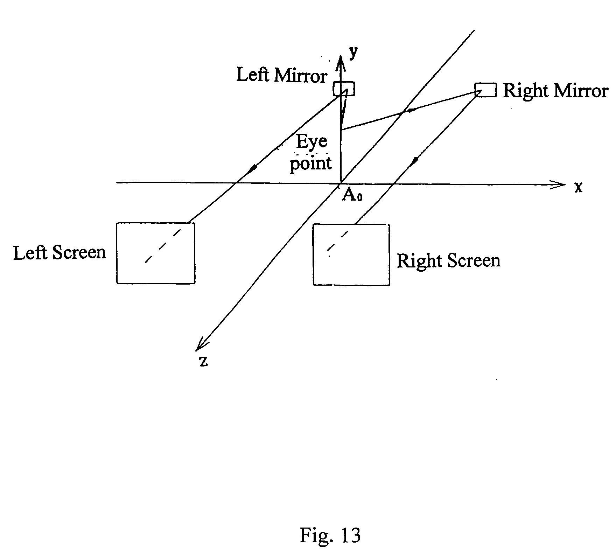

The known conditions for calculation with the values is: the spacial coordinates of light source, the coordinates of a point of edge corner of the left mirror and that of the right mirror, the sizes and positions of the mirror and objects. The relationship of all the above points constituted according to the above conditions is shown by Fig. 13.

In light of principle of difference, the equation (8)

$$dZ = -\left( \frac{X_N - X}{Z_N - Z} dX + \frac{Y_N - Y}{Z_N - Z} dY \right)$$

is differenced so as to have a difference equation:

$$Z(i+1, j+1) = -\left[ \frac{X_N - X_i}{Z_N - Z_i}(X_{i+1} - X_i) + \frac{Y_N - Y_i}{Z_N - Z_i}(Y_{i+1} - Y_i) \right] + Z(i,j) \qquad (10)$$

That is:

$$Z_{i+1,j+1} = Z_{i,j} - \frac{X_N - X_i}{Z_N - Z_i}(X_{i+1} - X_i) - \frac{Y_N - Y_i}{Z_N - Z_i}(Y_{i+1} - Y_i)$$

$$X_N = \frac{X_0 - \lambda X_2}{1 + \lambda}$$

$$Y_N = \frac{Y_0 - \lambda Y_2}{1 + \lambda}$$

$$Z_N = \frac{Z_0 + \lambda Z_2}{1 + \lambda}$$

$$\lambda = \sqrt{\frac{(X_0 - X_i)^2 + (Y_0 - Y_i)^2 + (Z_0 - Z_i)^2}{(X_i - X_2)^2 + (Y_i - Y_2)^2 + (Z_i - Z_2)^2}}$$

Wherein, the coordinates of eye point $A_0$ ($X_0$, $Y_0$, $Z_0$) and that of the corresponding point $A_2$ ($X_2$, $Y_2$, $Z_2$) are known. Based on the known conditions, any point on the mirror Z may have the value obtained and further the shape of the mirror may also be obtained.

INDUSTRIAL APPLICABILITY

In accordance with the test method of forming mirror surface of the present invention, an actual model of eye point of driver, the rear-view mirror and objects behind the mirror may be set up in the proportion of 1:1, and the true, correct relationship between the shape of the mirror surface and the designed field of view of the rear-view mirror may be found out with a special apparatus for forming the surface of mirror and by way of testing all the points in light of the design requirement of the rear-view mirror and the actual model. With the calculation method forming mirror surface, the geometrical and optical relationship between the eye point of the driver, the rear-view mirror and the objects behind the mirror may be set up, and the true, correct relationship between the shape of the mirror surface and the designed field of view of the rear-view mirror may be found out by way of calculating all the points in light of the design requirement of the rear-view mirror.

The present invention overcomes the imperfections of the prior art, and the mirror surface with larger field of view and free of blind spots may be designed via only one testing, making the image distortion deduced to the minimum on the basis of elimination of the blind spots and maximum enlargement of the view field of the rear-view mirror.

The method and the apparatus of the present invention may be applied to designing of the rear-view mirrors for vehicle with different types, sizes and applications, having the testing procedure simplified and the testing cost deduced.

**Claims**

1. A method for forming a surface of rear-view mirror for vehicle comprising the following steps:

   a. set a point of light source at the spacial position of simulated eye point of driver;

      set a reflection mirror at the spacial position of simulated rear-view mirror;
      set an background object at the position of object behind the simulated rear-view mirror;
      set a suppositive vehicle body by simulating the size and position of vehicle;

   b. direct the light of the light source to a predetermined area to be tested on the surface of said reflection mirror;
   c. adjust the shape of said surface of the reflection mirror, making said light reflected to a predetermined corresponding area of the background object via said predetermined area to be tested on the surface of said reflection mirror;
   d. direct the light to the next predetermined area to be tested on the surface of said reflection mirror;
   e. adjust the surface shape of said reflection mirror, making said light reflected to a next predetermined corresponding area of the background object via said next predetermined area to be tested on the surface of said reflection mirror;
   f. repeat the steps from d to e on all the predetermined area to be tested on the surface of said reflection mirror and the predetermined area on the background object; and
   g. take the surface shape of the reflection mirror obtained by finishing the above steps as the shape of the rear-view mirror.

2. A method for forming the surface of a rear-view mirror for vehicle according to claim 1 characterized in that said reflection mirror with changeable shape of the surface is composed of more than four independent unit lenses.

3. A method for forming the surface of a rear-view mirror for vehicle according to claim 2 characterized in that said independent unit lenses are plane lenses.

4. A method for forming the surface of a rear-view mirror for vehicle according to claim 3 characterized in that said independent lens units are rectangular lenses.

5. A method for forming the surface of a rear-view mirror for vehicle according to any one of the claims from 2 to 4 characterized in that the predetermined area to be tested on said rear-view mirror for vehicle is the reflection surface of said independent unit lenses on initial positions before adjustment.

6. A method for forming the surface of a rear-view mirror for vehicle according to any one of the claims from 1 to 5 characterized in that the bottom of said background object contacts with the ground surface, and one side of said background object close to the driver is on the longitudinal extended line of side surface of vehicle body.

7. A method for forming the surface of a rear-view mirror for vehicle according to any one of the claims from 1 to 6 characterized in that said background object is a curved surface or plane surface.

8. A method for forming the surface of a rear-view mirror for vehicle according to any one of the claims from 1 to 6 characterized in that said background objects are more than one curved surfaces or plane surfaces.

9. A method for forming the surface of a rear-view mirror for vehicle according to claim 7 characterized in that said curved or plane surface is vertically positioned.

10. A method for forming the surface of a rear-view mirror for vehicle according to claim 8 characterized in that said curved or plane surfaces are vertically positioned.

11. A method for forming the surface of a rear-view mirror for vehicle according to claim 9 characterized in that said curved or plane surface is one surface of a film, thin board, screen, wall or ground.

12. A method for forming the surface of a rear-view mirror for vehicle according to claim 10 characterized in that said curved or plane surfaces are surfaces of films, thin boards, screens, walls or grounds.

**13.** A method for forming the surface of a rear-view mirror for vehicle according to claim 11 characterized in that said surface is horizontally and vertically divided into more than four areas, each of them as a predetermined area corresponds one by one to a predetermined area to be tested on said mirror surface.

**14.** A method for forming the surface of a rear-view mirror for vehicle according to claim 12 characterized in that said surfaces are horizontally and vertically divided into more than four areas, each of them as a predetermined area corresponds one by one to a predetermined area to be tested on said mirror surface.

**15.** A method for forming the surface of a rear-view mirror for vehicle according to any one of the claims from 6 to 14 characterized in that the maximum outer boundary of said background object is on or outside of the boundary of the designed field of view of the rear-view mirror.

**16.** A method for forming the surface of a rear-view mirror for vehicle according to any one of the claims from 1 to 15 characterized in that there is, between the steps f and g, a processing step of data optimization:

i. collect the data of spacial position of said predetermined area to be tested of the surface of reflection mirror;
ii. take the data collected as the initial data for optimization processing, and simulate curved connection according to the principles of minimum second multiplication, preconditioned by smooth curved surface.

**17.** An apparatus for forming the surface of rear-view mirror for vehicle including a reflection mirror, a supporting frame of said reflection mirror as well as an adjusting means fixed on said frame and connected with said reflection mirror, characterized in that the surface shape of said reflection mirror is changeable.

**18.** An apparatus for forming the surface of rear-view mirror according to claim 17, characterized in that said reflection mirror is composed of more than four independent unit lenses.

**19.** An apparatus for forming the surface of rear-view mirror according to claim 18, characterized in that said unit lenses are plane lenses.

**20.** An apparatus for forming the surface of rear-view mirror according to claim 19, characterized in that said unit lenses are rectangular lenses.

**21.** An apparatus for forming the surface of rear-view mirror according to claim 19 or 20, characterized in that each of said independent unit lenses is hinged with an adjustment means of the reflection mirror.

**22.** An apparatus for forming the surface of rear-view mirror according to claim 21, characterized in that said adjustment for each of the unit lenses includes an adjusting screw pin and a adjusting rod, wherein said adjusting screw pin connects with a dead screw hole on one end of said adjusting rod and vertical to the surface of the rod end, and the other end of the adjusting rod has a universal joint which is hinged with a unit lens, and said adjusting rod is amounted on said supporting frame.

**23.** An apparatus for forming the surface of rear-view mirror according to any one of claims from 17 to 22, characterized in that said supporting frame is composed of three supporting boards, each of them has its surface vertical to the ground surface, and the three supporting boards are juxtaposed and connected with screw pins, wherein each of said supporting boards has some through holes numbered equal to the adjusting rods which are placed in the through holes.

**24.** A method for forming a rear-view mirror for vehicle, including the following steps:

a. set a light source at a simulated eye-point of driver,

set a suppositive reflection mirror at the simulated position of rear-view mirror,
set a suppositive background object at the position of simulated object behind the rear-view mirror,
set a suppositive vehicle body by simulating the size and position of a vehicle;

b. let the suppositive light from the light source scan the surface of all the suppositive reflection mirror, and at the same time adjusting the surface shape of said suppositive reflection mirror, making all the reflected light of every parts of the mirror surface fall on the suppositive object and cover all the background object;

c. take the shape of surface of said suppositive reflection mirror obtained by finishing the above steps as the shape of the surface of the rear-view mirror.

25. A method for forming the surface of rear-view mirror for vehicle according to claim 24, characterized in that said background object is a plane surface or a curved surface.

26. A method for forming the surface of rear-view mirror for vehicle according to claim 24, characterized in that said background objects are plane surfaces or curved surfaces.

27. A method for forming the surface of rear-view mirror for vehicle according to any one of the claims from 24 to 26, characterized in that the bottom of said background object contacts with the ground, and one side of said background object close to the driver is on the longitudinal extended line of the suppositive vehicle body.

28. A method for forming the surface of rear-view mirror for vehicle according to claim 25, characterized in that said plane or curved surface is vertically positioned.

29. A method for forming the surface of rear-view mirror for vehicle according to claim 26, characterized in that said plane or curved surfaces are vertically positioned.

30. A calculation method for forming a rear-view mirror for vehicle according to any one of claims front 24 to 29, characterized in that the maximum outer boundary of said background object is on or out of the boundary of designed field of view of the rear-view mirror/

31. A method for forming a rear-view mirror for vehicle according to any one of claims from 24 to 30, characterized in that the surface shape of said rear-view mirror may be expressed by the following mirror surface control equation:

$$dZ = -\left( \frac{X_N - X}{Z_N - Z} dX + \frac{Y_N - Y}{Z_N - Z} dY \right)$$

wherein:

X, Y, Z stand for any point on a rectangular coordinates on said minor surface, N is the cross point by the normal line of a plane surface cut from any point on the minor surface and the line connecting the suppositive light source to one point on the suppositive background object, $X_N$, $Y_N$, $Z_N$ are point N at the rectangular coordinates.

32. A method for forming a rear-view mirror for vehicle according to claim 31, characterized in that the difference equation for said minor surface control equation is expressed as:

$$Z(i+1, j+1) = -\left[ \frac{X_N - X_i}{Z_N - Z_i} (X_{i+1} - X_i) + \frac{Y_N - Y_i}{Z_N - Z_i} (Y_{i+1} - Y_i) \right] + Z(i, j)$$

that is:

$$Z_{i+1,j+1} = Z(i,j) - \frac{X_N - X_i}{Z_N - Z_i}\left(X_{i+1} - X_i\right) + \frac{Y_N - Y_i}{Z_N - Z_i}\left(Y_{i+1} - Y_i\right)$$

$$X_N = \frac{X_0 + \lambda X_2}{1 + \lambda}$$

$$Y_N = \frac{Y_0 + \lambda Y_2}{1 + \lambda}$$

$$Z_N = \frac{Z_0 + \lambda Z_2}{1 + \lambda}$$

$$\lambda = \sqrt{\frac{(X_0 - X_i)^2 + (Y_0 - Y_i)^2 + (Z_0 - Z_i)^2}{(X_i - X_2)^2 + (Y_i - Y_2)^2 + (Z_i - Z_2)^2}}$$

**33.** A rear-view mirror for vehicle formed by said method of claim 1.

**34.** A rear-view mirror for vehicle formed by said method of claim 24.

Fig. 1

Fig. 2

Fig. 3

–Calculated Value　　　•Measured Value

Fig. 4

−Calculated Value ●Measured Value

Fig. 5

—Calculated Value   •Measured Value

Fig. 6

−Calculated Value        •Measured Value

Fig. 7

Unit of Length: Meter

● View Range of Original Rear-View Mirror

× View Range of New Rear-View Mirror

Fig. 8

Fig. 9

Fig. 10

Fig. 11

Fig. 12

Fig. 13

−Calculated Value    •Measured Value

Fig. 14

-Calculated Value    •Measured Value

Fig. 15

## INTERNATIONAL SEARCH REPORT

| International application No. |
|---|
| PCT/CN 96/00024 |

**A. CLASSIFICATION OF SUBJECT MATTER**

IPC⁶ G02B 5/08 G01M 11/00 B60R 1/02

According to International Patent Classification (IPC) or to both national classification and IPC

**B. FIELDS SEARCHED**

Minimum documentation searched (classification system followed by classification symbols)

IPC⁶ G02B G01M B60R

Documentation searched other than minimum documentation to the extent that such documents are included in the fields searched

Electronic data base consulted during the international search (name of data base and, where practicable, search terms used)

**C. DOCUMENTENTS CONSIDERED TO BE RELEVANT**

| Category* | Citation of document, with indication, where appropriate, of the relevant passages | Relevant to claim No. |
|---|---|---|
| A | US. A. 5,481,408(Shimada) 02 Jan. 1996 (claims) | 1,6~16,24~32 |
| A | US. A. 4,173,036(Ferguson) 30 Oct. 1979 (column 1,2, claims) | 1,24 |
| A | US. A. 4,875,765(Vandenberg et al. ) 24 Oct. 1989 (abstract, figures) | 1,17 |
| A | US. A. 3,620,606(Hubert F. A. Tschunko et al. ) 16 Nov. 1971 (whole) | 17,22 |
| A | US. A. 4,093,351(Perkins et al. ) 06 Jun. 1978 (whole) | 17~23 |

☐ Further documents are listed in the continuation of Box C.    ☐ See patent family annex.

* Special categories of cited documents;
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 16 December 1996 (16.12.96) | 26 December 1996 (26.12.96) |

| Name and mailing address of the ISA/ | Authorized officer |
|---|---|
| Chinese Patent Office, 6 Xitucheng Rd.  Jimen Bridge, Haidian District, 100088 Beijing, China | |
| Facsimile No.  (86—10)62019451 | Telephone No. |

Form PCT/ISA/210(second sheet)(July 1992)

EP 0 895 098 A1

## INTERNATIONAL SEARCH REPORT
Information patent family members

International application No.

PCT/CN 96/00024

| Patent document cited in search report | Publication date | Patent family member(s) | Publication date |
|---|---|---|---|
| US. A. 5,481,408 | 02. Jan. 1996 | None | |
| US. A. 4,173,036 | 30. Oct. 1979 | None | |
| US. A. 4,875,765 | 24. Oct. 1989 | None | |
| US. A. 3,620,606 | 16. Nov. 1971 | None | |
| US. A. 4,093,351 | 06. Jun. 1998 | None | |

Form PCT/ISA/210(patent family annex)(July 1992)

33